# FASCICULE DE BREVET EUROPEEN

(11) **EP 4 218 117 B1**
(45) Date de publication et mention de la délivrance du brevet: **16.04.2025**
(21) Numéro de dépôt: 21754982.3
(22) Date de dépôt: 04.08.2021
(51) Int. Cl.: H02K 1/20, H02K 15/02, H02K 21/24

(54) **PROCÉDÉ DE FABRICATION D'UN STATOR DE MACHINE ÉLECTRIQUE À FLUX AXIAL**
VERFAHREN ZUR HERSTELLUNG EINES STATORS EINER ELEKTRISCHEN AXIALFLUSSMASCHINE
METHOD FOR MANUFACTURING A STATOR OF AN AXIAL FLOW ELECTRIC MACHINE

(30) Priorité: 24.09.2020 FR 2009726
(43) Date de publication de la demande: 02.08.2023
(73) Titulaire: Ampere SAS, 92100 Boulogne-Billancourt (FR)
(72) Inventeur: KOLEHMAINEN, Jere, 76410 SAINT-AUBIN-LÈS-ELBEUF (FR)
(74) Mandataire: Renault Group
(86) Numéro de dépôt international: PCT/EP2021/071722
(87) Numéro de publication internationale: WO 2022/063469

(56) Documents cités:
- CN-A- 109 510 341
- US-B2- 9 006 953

## Description

La présente invention se rapporte de manière générale aux domaines de l'électrotechnique et de la mécanique et concerne plus précisément la fabrication d'un stator de machine électrique à flux axial.

Un stator de machine électrique comporte des dents, généralement en acier magnétique, autour desquelles sont bobinés des fils de cuivre. Lorsque la machine électrique est en fonctionnement, les fils de cuivre produisent par effet Joule une chaleur qu'il faut évacuer. De plus le flux magnétique génère des courants de Foucault dans la structure en acier du stator et des pertes par hystérésis, qu'il faut également évacuer.

Un stator de machine électrique à flux axial est généralement refroidi à l'aide d'une plaque de refroidissement accolée à la culasse du stator, plus précisément sur la portion plane annulaire de la structure en acier du stator, à l'opposé de la portion dentée du stator. Cette plaque de refroidissement comporte des canaux permettant de faire circuler un liquide de refroidissement, par exemple de l'huile. Cependant l'ajout d'une structure spécifique pour le refroidissement ajoute de l'encombrement et du coût en matière à la machine produite. De plus il est difficile de garantir une bonne surface de contact et une bonne conduction thermique entre la plaque de refroidissement et la culasse du stator.

Le document FR2999359 propose d'intégrer cette structure de refroidissement au carter de la machine électrique. Cependant cette solution est complexe à mettre en œuvre et ne garantit pas non plus une bonne conduction thermique entre les canaux de refroidissement et la culasse statorique.

Le document US9006953 propose un stator de machine électrique à flux axial fabriqué par enroulement de tôles, dans lesquelles des évidements sont prévus pour former des canaux radiaux traversants. Un tuyau passant par ces évidements et notamment sur la périphérie radiale interne du stator est nécessaire pour former un circuit de refroidissement du stator. La conduction thermique entre le tuyau et les tôles est de ce fait non optimale et de plus l'encombrement du tuyau sur la périphérie interne du stator n'est pas souhaitable. Le montage d'un tel stator et son coût ne sont pas optimaux.

Un des buts de l'invention est de remédier à au moins une partie des inconvénients de la technique antérieure en fournissant un procédé de fabrication d'un stator pour machine électrique à flux axial, permettant un bon refroidissement du stator, rapide et peu coûteux.

A cette fin, l'invention propose un procédé de fabrication d'un stator de machine électrique à flux axial, comportant les étapes de :
- perforation d'un ruban de tôle magnétique, ladite étape de perforation comportant :
   - le découpage de matière sur une première partie latérale du ruban, laissant sur ledit ruban des créneaux destinés à former des dents statoriques,
   - le découpage sur une deuxième partie latérale du ruban, opposée à ladite première partie latérale du ruban, d'évidements destinés à former des canaux de circulation de liquide de refroidissement
- enroulement dudit ruban de tôle selon un empilement radial,
caractérisé en ce que lors du découpage de matière entre deux créneaux dudit ruban, le découpage des évidements s'effectue par une perforation double symétriquement par rapport à une ligne parallèle à l'axe de symétrie axiale compris entre lesdits deux créneaux, les évidements étant découpés de manière à être positionnés de part et d'autre de la section radiale du stator enroulé passant par ladite ligne, de manière distante les uns des autres depuis une première partie périphérique radiale dudit stator jusqu'à se rejoindre sur ladite section radiale au niveau de la deuxième partie périphérique radiale dudit stator opposée à ladite première partie périphérique radiale, formant ainsi lesdits canaux, lesdits canaux étant en forme de V et se rejoignant aux extrémités des branches de V lors de ladite étape d'enroulement.

Grâce à l'invention, les canaux de refroidissement du stator forment un circuit en zigzag sur la périphérie axiale du stator opposée à la périphérie axiale dentée du stator. Le liquide de refroidissement tel que de l'huile par exemple, peut donc circuler dans ce circuit directement sur les tôles statoriques, ce qui augmente l'efficacité du refroidissement par rapport à l'art antérieur. L'absence de tuyau additionnel pour la circulation de l'huile dans le stator limite l'encombrement du système de refroidissement. De plus la réalisation des canaux est avantageusement aussi rapide que dans l'art antérieur US9006953, puisque dans l'invention, de manière préférentielle, la perforation des évidements formant ces canaux et la perforation des créneaux s'effectue également en une seule opération.

Selon une caractéristique avantageuse du procédé selon l'invention, lesdits canaux sont ouverts, au niveau des branches du V et/ou de la pointe du V, sur ladite première ou ladite deuxième partie périphérique radiale dudit stator.

Cette caractéristique permet d'avoir la même découpe pour toutes les dents du stator, ce qui est plus facile à réaliser que de n'ouvrir sur la première ou la deuxième périphérie radiale du stator, que les canaux qui débouchent sur une entrée ou une sortie du circuit de liquide de refroidissement faisant l'interface entre le stator et un échangeur thermique.

Selon une autre caractéristique avantageuse de l'invention, ladite première partie périphérique radiale dudit stator est une partie périphérique interne dudit stator, ladite deuxième partie périphérique radiale dudit stator étant une partie périphérique externe dudit stator.

Ce mode de réalisation de l'invention est plus simple que celui dans lequel les branches du V donnent sur la périphérie radiale externe du stator.

Selon encore une autre caractéristique avantageuse de l'invention, ladite ligne parallèle correspond à l'axe de symétrie axiale compris entre lesdits deux créneaux. Ainsi cet axe de symétrie axiale peut servir de repère pour la perforation des évidements, qui est alors plus facile à contrôler.

Avantageusement, lorsque lesdits canaux débouchent sur au moins l'une des périphéries radiales du stator, le procédé de fabrication du stator selon l'invention comporte en outre une étape d'application d'un joint sur ladite première partie périphérique radiale et/ou sur ladite deuxième partie périphérique radiale du stator, aux débouchés desdits canaux qui ne servent pas d'entrée ou de sortie audit liquide de refroidissement.

Avantageusement encore, lorsque lesdits évidements débouchent sur une périphérie axiale dudit stator, le procédé de fabrication d'un stator selon l'invention comporte en outre une étape de fermeture desdits canaux sur ladite périphérie axiale par la fixation d'une plaque annulaire sur ladite périphérie axiale.

Enfin l'invention concerne aussi un stator fabriqué par le procédé selon l'invention.

D'autres caractéristiques et avantages apparaîtront à la lecture d'un mode de réalisation préféré décrit en référence aux figures dans lesquelles :
- la figure 1 représente des étapes du procédé de fabrication selon l'invention, dans ce mode de réalisation préféré de l'invention,
- la figure 2a représente une étape de perforation du procédé de fabrication selon l'invention sur la première partie d'un ruban de tôle formant la périphérie radiale interne d'une culasse statorique en fabrication, juste avant l'actionnement d'un mandrin, dans ce mode de réalisation préféré de l'invention,
- la figure 2b représente l'étape de perforation de la figure 2a, à un moment suivant qui est l'actionnement du mandrin,
- la figure 2c représente l'étape de perforation de la figure 2b, à un moment suivant qui est le désengagement du mandrin,
- la figure 2d représente ladite étape de perforation sur une deuxième partie du ruban de tôle formant une portion annulaire interne de la culasse statorique en fabrication, juste avant l'actionnement d'un mandrin,
- la figure 2e représente l'étape de perforation de la figure 2d, à un moment suivant qui est l'actionnement du mandrin,
- la figure 2f représente l'étape de perforation de la figure 2e, à un moment suivant qui est le désengagement du mandrin,
- la figure 2g représente ladite étape de perforation sur une dernière partie du ruban de tôle formant la périphérie radiale externe de la culasse statorique en fabrication, juste avant l'actionnement d'un mandrin,
- la figure 2h représente l'étape de perforation de la figure 2g, à un moment suivant qui est l'actionnement du mandrin,
- la figure 2i représente l'étape de perforation de la figure 2h, à un moment suivant qui est le désengagement du mandrin,
- la figure 3 représente un stator fabriqué selon l'invention, dans ce mode de réalisation préféré de l'invention,
- la figure 4 représente deux portions d'une culasse d'un stator fabriqué selon deux variantes différentes de réalisation de l'invention,
- et la figure 5 représente une portion de culasse et une portion de plaque de fermeture d'un stator fabriqué selon le mode préféré de réalisation de l'invention.

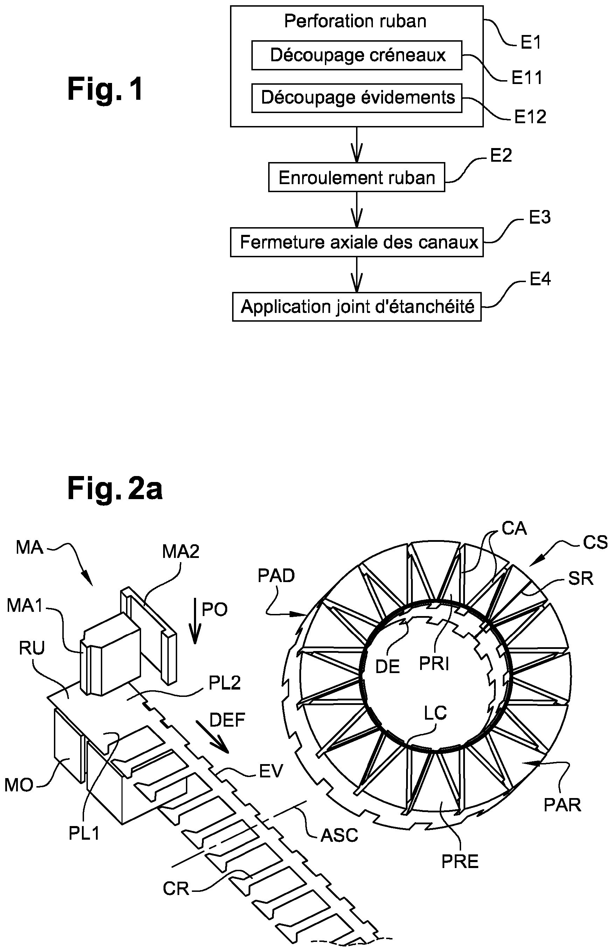

Selon un mode de réalisation préféré de l'invention représenté à la **figure 1****,** le procédé de fabrication d'un stator de machine électrique à flux axial selon l'invention comporte des étapes E1 à E4.

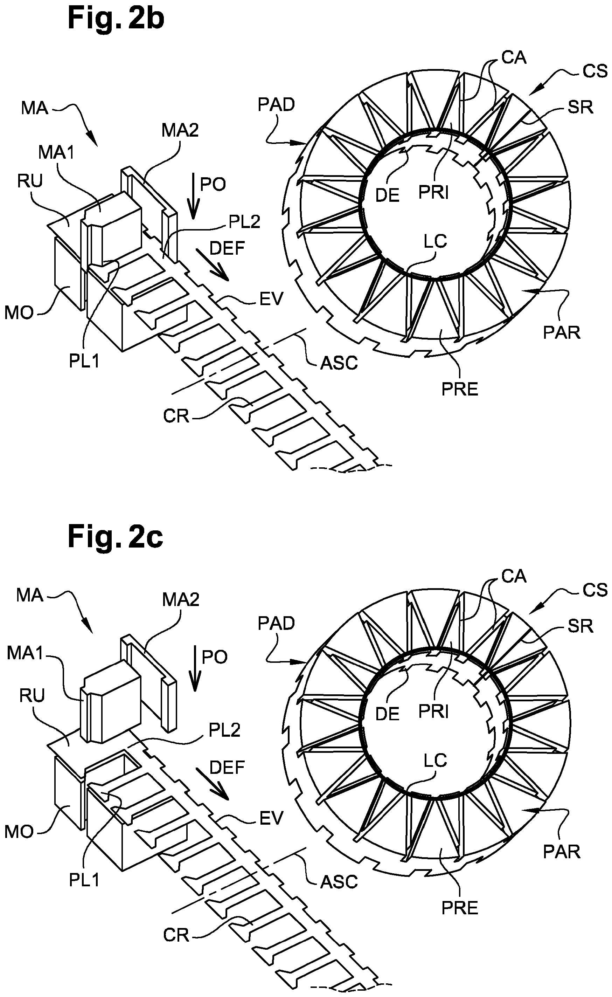

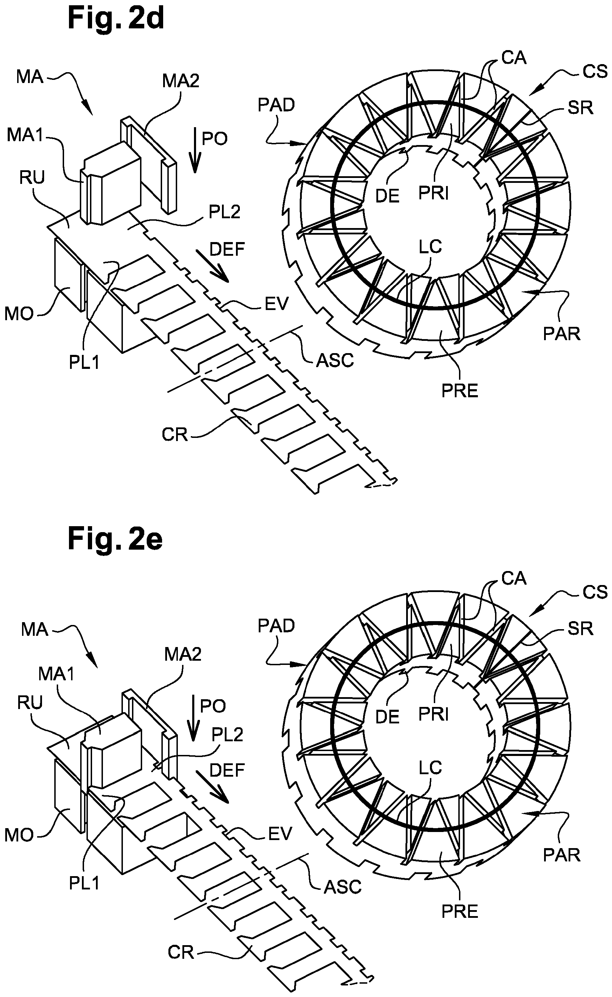

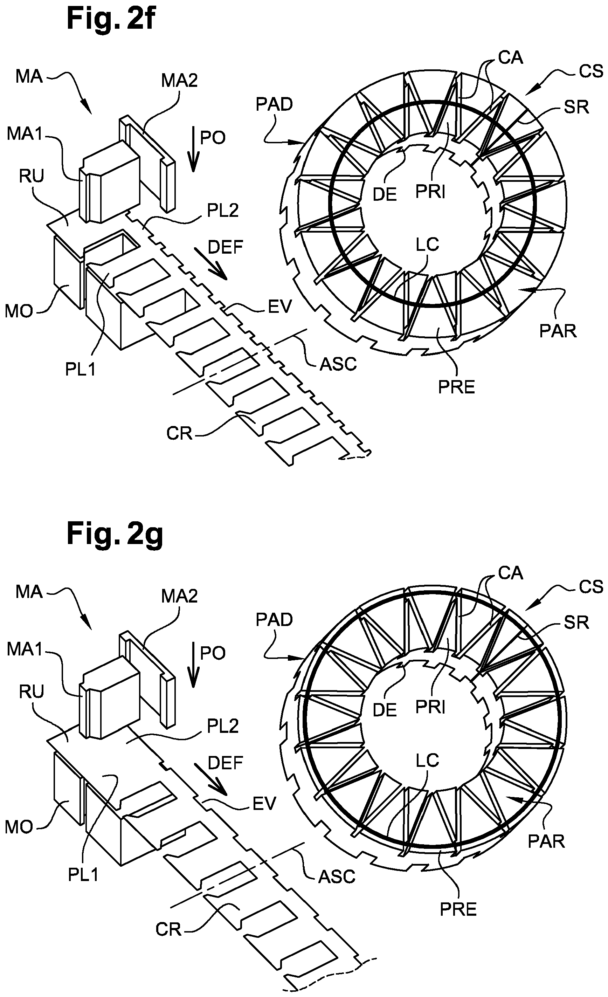

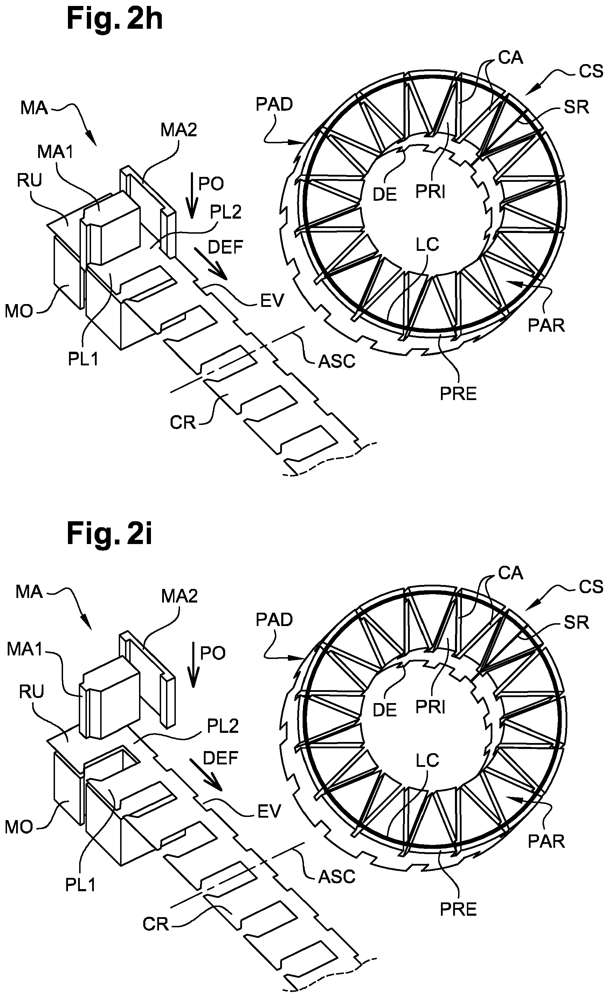

L'étape E1, représentée sur les **figures 2a à 2i**, est la perforation d'un ruban de tôle magnétique RU. Le ruban RU est par exemple mais non nécessairement en acier à grains orientés. Dans ce dernier cas les grains sont préférentiellement orientés dans le sens d'enroulement de la tôle de sorte à guider le flux magnétique dans la culasse statorique CS dans le sens angulaire lors du fonctionnement de la machine électrique. Il est à noter que l'étape d'enroulement de la tôle pour former la culasse statorique du stator sera décrite plus loin.

Cette étape E1 de perforation comporte deux sous-étapes effectuées simultanément :
- une sous-étape E11 de découpage de créneaux CR qui formeront les dents DE de la culasse statorique CS,
- et une sous-étape E12 de découpage d'évidements EV qui formeront des canaux de refroidissement CA sur la périphérie axiale PAR de la culasse statorique CS opposée à la périphérie axiale dentée PAD de la culasse statorique CS.

L'étape E1 utilise un moule MO sur lequel défile le ruban RU dans la direction DEF de défilement, et un mandrin MA qui est actionné à pas de temps réguliers contre le ruban RU dans le sens de perforation PO. Le mandrin MA comporte une première partie MA1 qui découpe les créneaux CR sur une première partie latérale PL1 du ruban RU, et une deuxième partie MA2 qui découpe des évidements sur une partie latérale PL2 du ruban RU, opposée à la partie latérale PL1 du ruban RU.

Plus précisément la deuxième partie MA2 du mandrin comporte deux poinçons répartis symétriquement à distance l'un de l'autre par rapport à l'axe longitudinal de symétrie axiale de la première partie MA1 du mandrin. Ainsi à chaque découpe de matière entre deux créneaux CR en formation, deux évidements sont effectués à distance l'un de l'autre symétriquement par rapport à l'axe de symétrie axial ASC de ces deux créneaux l'un par rapport à l'autre.

On peut voir sur les **figures 2a à 2c**, la découpe du ruban RU au niveau de ce qui forme, après enroulement, la périphérie interne de la culasse statorique CS, marquée par la ligne circulaire LC. Dans ces figures, l'étape de perforation réalise en une application du mandrin MA un évidement plus large que la largeur d'un poinçon de la deuxième partie MA2 du mandrin, par recoupement avec un évidement précédemment réalisé lors de cette étape de perforation, ainsi qu'un évidement de la largeur d'un poinçon de la deuxième partie MA2 du mandrin. En effet la largeur des dents statoriques DE étant étroite à la périphérie interne PRI de la culasse statorique CS, par rapport à leur largeur à la périphérie externe PRE de la culasse statorique CS, la distance entre les poinçons de la deuxième partie MA2 du mandrin englobe une largeur de plusieurs créneaux. Ces évidements larges correspondent à la jonction de deux canaux CA de refroidissement au niveau de la périphérie interne PRI de la culasse statorique CS. Ces évidements sont distants de manière symétrique par rapport à la section radiale SR de la culasse statorique CS passant par l'axe de symétrie axiale ASC.

Lors de la découpe du ruban RU au niveau de la tôle disposée radialement au milieu de la culasse statorique CS, représentée par la ligne circulaire LC sur les **figures 2d à 2f**, les créneaux découpés sont plus larges que sur les **figures 2a à 2c****.** L'étape de perforation en une application du mandrin MA réalise deux évidements chacun de la largeur d'un poinçon de la deuxième partie MA2 du mandrin MA. Ces évidements correspondent à deux canaux CA distincts de refroidissements qui se rejoignent au niveau de la périphérie interne PRI de la culasse statorique CS.

Lors de la découpe du ruban RU au niveau de la tôle disposée en périphérie externe de la culasse statorique CS, représentée par la ligne circulaire LC sur les **figures 2g à 2i**, les créneaux découpés sont plus larges que sur les **figures 2d à 2f**. L'étape de perforation réalise de nouveau en une application du mandrin MA un évidement plus large que la largeur d'un poinçon de la deuxième partie MA2 du mandrin, par recoupement avec un évidement précédemment réalisé lors de cette étape de perforation, ainsi qu'un évidement de la largeur d'un poinçon de la deuxième partie MA2 du mandrin. Ces évidements correspondent à deux canaux CA distincts de refroidissement qui se rejoignent au niveau de la périphérie externe PRE de la culasse statorique CS.

L'étape E2 est ensuite l'enroulement du ruban RU, la tôle du ruban RU étant empilée radialement sur elle-même lors de cette étape, pour former la culasse statorique CS.

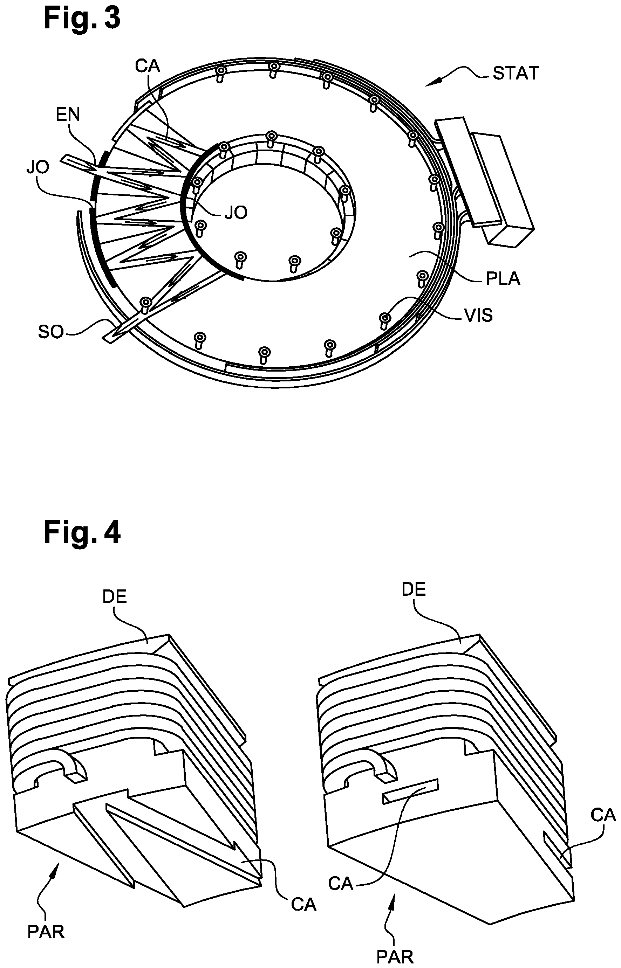

L'étape E3 est la fermeture axiale des canaux de refroidissement CA par la pose d'une plaque annulaire PLA sur la périphérie axiale PAR de la culasse statorique CS du stator STAT qui est fabriqué, comme représenté sur la **figure 3****.** Cette plaque PLA est par exemple vissée par des vis VIS sur la culasse statorique CS. Sur cette **figure 3** sont dessinés les canaux CA tels qu'ils seraient visibles si la plaque PLA était transparente, sur une portion du stator STAT.

L'étape E4 est enfin l'application d'un joint d'étanchéité JO sur les périphéries radiales internes PRI et externe PRE du stator STAT, pour fermer radialement les canaux CA à leurs extrémités qui ne servent pas d'entrée EN ou de sortie SO au circuit d'huile compris dans la culasse statorique CS. Ces entrées et sorties sont ensuite connectées aux tuyaux d'un circuit de refroidissement externe au stator STAT, comportant un échangeur de chaleur.

Il est à noter que la disposition des canaux CA sur la périphérie axiale PAR de la culasse statorique CS n'est en réalité pas dépendante de la position angulaire des dents DE. Il est donc possible en variante de poinçonner les évidements EV symétriquement de part et d'autre d'une ligne parallèle à la ligne de symétrie axiale ASC mais décalée de celle-ci d'une position angulaire quelconque.

La **figure 4** représente sur la gauche une portion de la culasse statorique CS, correspondant à une dent statorique, dans la variante principale de réalisation de l'invention. Dans cette variante principale de l'invention, les extrémités des canaux CA sont débouchantes radialement. Il est bien sûr possible en variante de réaliser les canaux CA de manière non débouchante. L'étanchéité interne à la culasse statorique des canaux CA est assurée par exemple par du vernis, de la colle ou de la peinture. Cette étanchéité n'a pas besoin d'être parfaite dans la mesure où on utilise en général de l'huile comme liquide de refroidissement, l'important étant que le flux de liquide soit majoritairement bien guidé dans les canaux CA.

Sur la droite de la **figure 4** est représentée une variante de réalisation de l'invention, dans laquelle les canaux CA sont fermés axialement dans la culasse statorique CS. Pour réaliser cette variante, les poinçons de la deuxième partie MA2 du mandrin MA réalisent des trous dans la deuxième partie latérale PL2 du ruban RU, ne débouchant pas vers l'extérieur du ruban RU.

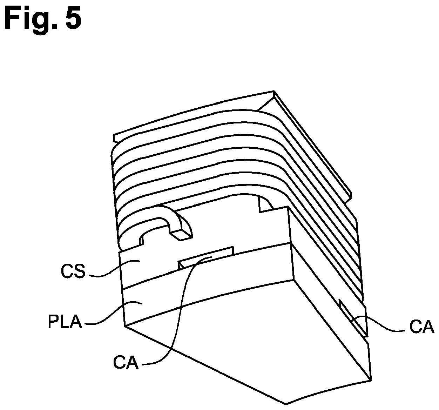

Enfin la **figure 5** représente une portion de la culasse statorique CS, correspondant à une dent statorique DE, dans la variante principale de réalisation de l'invention, ainsi que la portion de la plaque PLA correspondante, vissée ou collée à la culasse statorique CS. Il est bien sûr possible de fabriquer la culasse statorique CS de manière segmentée, par empilement de tôles découpées pour chaque portion de dent statorique, mais cette fabrication procure beaucoup moins d'avantages que la méthode d'enroulement de tôle utilisée dans l'invention.

## Revendications

1. Procédé de fabrication d'un stator (STAT) de machine électrique à flux axial, comportant les étapes de :
- perforation (E1) d'un ruban (RU) de tôle magnétique, ladite étape de perforation comportant :
- le découpage (E11) de matière sur une première partie latérale (PL1) du ruban, laissant sur ledit ruban des créneaux (CR) destinés à former des dents statoriques (DE),
- le découpage (E12) sur une deuxième partie latérale (PL2) du ruban (RU), opposée à ladite première partie latérale (PL1) du ruban (RU), d'évidements (EV) destinés à former des canaux (CA) de circulation de liquide de refroidissement
- enroulement (E2) dudit ruban (RU) de tôle selon un empilement radial, **caractérisé en ce que** lors du découpage (E11) de matière entre deux créneaux dudit ruban (RU), le découpage (E12) des évidements (EV) s'effectue par une perforation double symétriquement par rapport à une ligne parallèle à l'axe de symétrie axiale (ASC) compris entre lesdits deux créneaux, les évidements (EV) étant découpés de manière à être positionnés de part et d'autre de la section radiale (SR) du stator enroulé (STAT) passant par ladite ligne, de manière distante les uns des autres depuis une première partie périphérique radiale dudit stator (STAT) jusqu'à se rejoindre sur ladite section radiale (SR) au niveau de la deuxième partie périphérique radiale dudit stator (STAT) opposée à ladite première partie périphérique radiale, formant ainsi lesdits canaux (CA), lesdits canaux (CA) étant en forme de V et se rejoignant aux extrémités des branches de V lors de ladite étape d'enroulement (E2).

2. Procédé de fabrication d'un stator (STAT) de machine électrique à flux axial selon la revendication 1, **caractérisé en ce que** lesdits canaux (CA) sont ouverts, au niveau des branches du V et/ou de la pointe du V, sur ladite première ou ladite deuxième partie périphérique radiale dudit stator (STAT).

3. Procédé de fabrication d'un stator (STAT) de machine électrique à flux axial selon la revendication 1 ou 2, **caractérisé en ce que** ladite première partie périphérique radiale dudit stator est une partie périphérique interne (PRI) dudit stator (STAT), ladite deuxième partie périphérique radiale dudit stator étant une partie périphérique externe (PRE) dudit stator (STAT).

4. Procédé de fabrication d'un stator (STAT) de machine électrique à flux axial selon l'une quelconque des revendications 1 à 3, **caractérisé en ce que** ladite ligne parallèle correspond à l'axe de symétrie axiale (ASC) compris entre lesdits deux créneaux.

5. Procédé de fabrication d'un stator (STAT) de machine électrique à flux axial selon l'une quelconque des revendications 2 à 4, comportant en outre une étape (E4) d'application d'un joint sur ladite première partie périphérique radiale et/ou sur ladite deuxième partie périphérique radiale du stator (STAT), aux débouchés desdits canaux (CA) qui ne servent pas d'entrée (EN) ou de sortie (SO) audit liquide de refroidissement.

6. Procédé de fabrication d'un stator (STAT) de machine électrique à flux axial selon l'une quelconque des revendications 1 à 5, **caractérisé en ce que** lesdits évidements (EV) débouchent sur une périphérie axiale (PAR) dudit stator (STAT), ledit procédé comportant en outre une étape (E3) de fermeture desdits canaux (CA) sur ladite périphérie axiale (PAR) par la fixation d'une plaque annulaire (PLA) sur ladite périphérie axiale (PAR).

7. Stator (STAT) fabriqué par le procédé selon l'une quelconque des revendications 1 à 6.

## Patentansprüche

1. Verfahren zur Herstellung eines Stators (STAT) einer elektrischen Axialflussmaschine, das aus folgenden Schritten besteht:
- Perforieren (E1) eines Streifens (RU) aus Magnetblech, wobei der Schritt des Perforierens Folgendes aufweist:
- das Schneiden (E11) von Material an einem ersten Seitenabschnitt (PL1) des Streifens, wobei auf dem Streifen Zacken (CR) zurückbleiben, die dazu bestimmt sind, Statorzähne (DE) zu bilden,
- das Schneiden (E12) von Aussparungen (EV) auf einem zweiten Seitenabschnitt (PL2) des Streifens (RU), der dem ersten Seitenabschnitt (PL1) des Streifens (RU) gegenüberliegt, um Kanäle (CA) für die Zirkulation von Kühlflüssigkeit zu bilden,
- Wickeln (E2) des Blechstreifens (RU) in einer radialen Stapelung,
**dadurch gekennzeichnet, dass** beim Schneiden (E11) von Material zwischen zwei Zacken des Streifens (RU) das Schneiden (E12) der Aussparungen (EV) durch eine Doppelperforation symmetrisch in Bezug auf eine Linie parallel zur axialen Symmetrieachse (ASC), die zwischen den beiden Zacken enthalten ist, erfolgt, wobei die Aussparungen (EV) so geschnitten werden, dass sie auf beiden Seiten des radialen Abschnitts (SR) des gewickelten Stators (STAT), der durch die Linie verläuft, positioniert werden, beabstandet zueinander von einem ersten radialen Umfangsabschnitt des Stators (STAT) bis zum Zusammentreffen auf dem radialen Abschnitt (SR) an dem zweiten radialen Umfangsabschnitt des Stators (STAT) gegenüber dem ersten radialen Umfangsabschnitt, wodurch die Kanäle (CA) gebildet werden, wobei die Kanäle (CA) V-förmig sind und sich an den Enden der V-Schenkel während des Wicklungsschritts (E2) zusammentreffen.

2. Verfahren zur Herstellung eines Stators (STAT) einer elektrischen Axialflussmaschine nach Anspruch 1, **dadurch gekennzeichnet, dass** die Kanäle (CA) an den Schenkeln des V und/oder der Spitze des V an dem ersten oder zweiten radialen Umfangsabschnitt des Stators (STAT) offen sind.

3. Verfahren zur Herstellung eines Stators (STAT) einer elektrischen Axialflussmaschine nach Anspruch 1 oder 2, **dadurch gekennzeichnet, dass** der erste radiale Umfangsabschnitt des Stators ein innerer Umfangsabschnitt (PRI) des Stators (STAT) ist, wobei der zweite radiale Umfangsabschnitt des Stators ein äußerer Umfangsabschnitt (PRE) des Stators (STAT) ist.

4. Verfahren zur Herstellung eines Stators (STAT) einer elektrischen Axialflussmaschine nach einem der Ansprüche 1 bis 3, **dadurch gekennzeichnet, dass** die parallele Linie der axialen Symmetrieachse (ASC) entspricht, die zwischen den beiden Zacken eingeschlossen ist.

5. Verfahren zur Herstellung eines Stators (STAT) einer elektrischen Axialflussmaschine nach einem der Ansprüche 2 bis 4, das außerdem einen Schritt (E4) zum Aufbringen einer Dichtung auf den ersten radialen Umfangsabschnitt und/oder den zweiten radialen Umfangsabschnitt des Stators (STAT) an den Mündungen der Kanäle (CA) aufweist, die nicht als Einlass (EN) oder Auslass (SO) für die Kühlflüssigkeit dienen.

6. Verfahren zur Herstellung eines Stators (STAT) einer elektrischen Axialflussmaschine nach einem der Ansprüche 1 bis 5, **dadurch gekennzeichnet, dass** die Aussparungen (EV) an einem axialen Umfang (PAR) des Stators (STAT) münden, wobei das Verfahren außerdem einen Schritt (E3) zum Verschließen der Kanäle (CA) an dem axialen Umfang (PAR) durch die Befestigung einer ringförmigen Platte (PLA) an dem axialen Umfang (PAR) aufweist.

7. Stator (STAT), der durch das Verfahren nach einem der Ansprüche 1 bis 6 hergestellt wurde.

## Claims

1. Method for manufacturing a stator (STAT) for an axial flux electric machine, comprising the steps of:
- perforating (E1) a magnetic metal sheet strip (RU), said perforation step comprising:
- cutting (E11) material on a first lateral part (PL1) of the strip, leaving slots (CR) on said strip that are intended to form stator teeth (DE),
- cutting (E12) recesses (EV) on a second lateral part (PL2) of the strip (RU), opposite to said first lateral part (PL1) of the strip (RU), that are intended to form coolant circulation channels (CA),
- winding (E2) said metal sheet strip (RU) according to a radial stack,
**characterized in that** during the cutting (E11) of material between two slots of said strip (RU), the cutting (E12) of the recesses (EV) is effected by a double perforation symmetrically with respect to a line parallel to the axis of axial symmetry (ASC) comprised between said two slots, the recesses (EV) being cut so as to be positioned on either side of the radial section (SR) of the wound stator (STAT) passing through said line, so as to be spaced apart from one another from a first radial peripheral part of said stator (STAT) until they meet on said radial section (SR) at the second radial peripheral part of said stator (STAT) that is opposite to said first radial peripheral part, thus forming said channels (CA), said channels (CA) being in the form of a V and meeting at the ends of the branches of the V during said winding step (E2).

2. Method for manufacturing a stator (STAT) for an axial flux electric machine according to Claim 1, **characterized in that** said channels (CA) are open, at the branches of the V and/or at the point of the V, on said first or said second radial peripheral part of said stator (STAT).

3. Method for manufacturing a stator (STAT) for an axial flux electric machine according to Claim 1 or 2, **characterized in that** said first radial peripheral part of said stator is an internal peripheral part (PRI) of said stator (STAT), said second radial peripheral part of said stator being an external peripheral part (PRE) of said stator (STAT).

4. Method for manufacturing a stator (STAT) for an axial flux electric machine according to any one of Claims 1 to 3, **characterized in that** said parallel line corresponds to the axis of axial symmetry (ASC) comprised between said two slots.

5. Method for manufacturing a stator (STAT) for an axial flux electric machine according to any one of Claims 2 to 4, further comprising a step (E4) of applying a seal to said first radial peripheral part and/or to said second radial peripheral part of the stator (STAT), at those openings of said channels (CA) which do not serve as inlet (EN) or outlet (SO) for said coolant.

6. Method for manufacturing a stator (STAT) for an axial flux electric machine according to any one of Claims 1 to 5, **characterized in that** said recesses (EV) open out at an axial periphery (PAR) of said stator (STAT), said method further comprising a step (E3) of closing said channels (CA) at said axial periphery (PAR) by fastening an annular plate (PLA) to said axial periphery (PAR).

7. Stator (STAT) manufactured by the method according to any one of Claims 1 to 6.
